# EUROPÄISCHE PATENTSCHRIFT

(11) **EP 0 597 467 B1**
(45) Veröffentlichungstag und Bekanntmachung des Hinweises auf die Patenterteilung: **15.07.1998**
(21) Anmeldenummer: 93118234.9
(22) Anmeldetag: 10.11.1993
(51) Int. Cl.: G05B 19/10, A61C 1/00

(54) **Bedienungsteil für einen zahnärztlichen Behandlungsplatz**
Control panel for an apparatus for dental treatement
Panel de contrôle pour un appareil de traitement dentaire

(30) Priorität: 12.11.1992 DE 4238259
(43) Veröffentlichungstag der Anmeldung: 18.05.1994
(73) Patentinhaber: KALTENBACH & VOIGT GMBH & CO., 88400 Biberach (DE)
(72) Erfinder: Gmeinder, Hermann, D-88400 Biderach/Mettenberg (DE); Baier, Stefan, D-88400 Biberach/Riss (DE)
(74) Vertreter: Schmidt-Evers, Jürgen, Dipl.-Ing.

(56) Entgegenhaltungen:
- EP-A- 0 293 618
- EP-A- 0 475 885
- WO-A-89/05613
- DE-U- 9 110 348
- GB-A- 2 224 370
- FEINWERKTECHNIK + MESSTECHNIK, Bd.98, Nr.1/2, 1990, MUENCHEN DE Seiten 17 - 19, XP000094895 JOACHIM BORST 'LCID - Eine neue Flüssigkristallanzeige'

## Beschreibung

Die Erfindung bezieht sich auf ein Bedienungsteil nach dem Oberbegriff des Anspruchs 1.

Aus dem Prospekt "Isotron" der Fa. Eurodent ist eine zahnärztliche Behandlungseinheit mit einem Bedienungsteil bekannt, dessen permanent zur Betätigung von Funktions-Schaltgliedern vorhandene Tastenfelder und Funktions-Schaltgliedern vorhandene Tastenfelder und Funktionsanzeigen auf einer relativ kleinen Bedienungsfläche angeordnet und zwecks besserer Übersichtlichkeit und Bedienungssicherheit durch unterschiedliche Symbole und farbliche Gestaltung voneinander abgegrenzt sind. Zusätzliche Tastenfelder bzw. Schaltglieder und Anzeigen können nur auf Kosten der Bedienungssicherheit der Bedienungsfläche und unter Vergrößerung derselben aufgenommen werden.

In der EP-A-0 293 618 ist ein Steuerpult zur Steuerung einer Maschine, insbesondere einer Druckmaschine, beschrieben, wobei ein Display als Anzeigeneinheit dient. Auf dem Steuerpult sind neben dem Display drei Gruppen von Bedienelementen angeordnet, die als Tasten oder berührungslose Sensoren ausgestattet sein können. Mit Hilfe der ersten Bedienelementengruppe wird eine bestimmte Hauptgruppe Steuerelemente der zu steuernden Maschine ausgewählt. Die Auswahl einer bestimmten Komponente der gewählten Hauptgruppe wird mittels der zweiten Bedienelementengruppe durchgeführt. Nach Auswahl einer Hauptgruppe werden die zweiten Bedienelemente mit entsprechenden Funktionen belegt und entsprechende Symbole neben den zweiten Bedienelementen auf dem Display angezeigt. Dabei werden nach Auswahl einer Komponente der gewählten Hauptgruppe eine schematische Darstellung der gewählten Komponente auf dem Display angezeigt und die dritten Bedienelemente entsprechend belegt. Auf dem Display leuchten dann entsprechende Symbole auf. Die dritten Bedienelemente dienen zur Steuerung bzw. zum An- und Abschalten der gewählten Komponente und zum Verändern des Betriebszustandes der gewählten Komponente. Der Betriebszustand wird jeweils auf dem Display wiedergegeben. Wird ein bestimmtes Steuerelement bzw. Funktionsglied eingeschaltet, so wird der eingeschaltete Betriebszustand durch Aufleuchten des entsprechenden Funktionsgliedes auf dem Display angezeigt. Wenn ein Funktionsglied wertemäßig verstellt wird, dann wird die Größe des Einstellwertes ebenfalls graphisch beispielsweise mit Hilfe eines Werteanzeigers auf dem Display optisch erkenntlich gemacht.

In der DE-U-91 10 348 ist ebenfalls ein Steuerpult zur Steuerung einer Maschinenanlage bekannt. Auf einem Anzeigebildschirm wird die gesteuerte Maschine zunächst vollständig abgebildet. Der Anzeigebildschirm ist als berührungssensitiver Bildschirm ausgebildet und weist Druckknöpfe auf, durch deren Betätigung auf eine untergeordnete Menü-Ebene umgeschaltet und abhängig von dem gewählten Druckknopf andere Menüs mit anderen Darstellungen auf dem Bildschirm wiedergegeben werden können. Mit Hilfe der Druckknöpfe können ebenfalls Einstellwerte bestimmter Funktionsglieder der zu steuernden Maschine verändert werden, wobei die eingestellten Werte graphisch am Bildschirm angezeigt werden.

Ein Bedienungsteil der eingangs angegebenen Art ist in der internationalen Patentanmeldung WO 89/05613 beschrieben. Bei diesem bekannten Bedienungsteil ist ein die Funktions-Schaltelemente bildendes Tastenfeld vorgesehen, das hierarchisch geordnet ist. Jeder Tastenfeld-Satz besteht aus 16 Tastenfeldern, die in senkrecht zueinander angeordneten Tastenfeld-Zeilen angeordnet sind. Über den Zeilen verläuft zwischen einem Geber und einem Sensor ein IR- oder UV-Lichtstrahl, der durch Tasten mit einem Finger des Benutzers auf das entsprechende Tastenfeld unterbrochen wird. Auf diese Weise werden berührungslose Tastschalter gebildet. Eines der Tastenfelder stellt ein Auswahl-Schaltelement dar und dient zum Weiterschalten auf den nächsten Tastenfeld-Satz, der dann anstelle des bisherigen Tastenfeld-Satz auf der gleichen Bedienungs-bzw. Tastenfeldfläche erscheint. Bei diesem bekannten Bedienungsteil wird somit durch eine Betätigung des Auswahl-Schaltelements stets der ganze Tastenfeld-Satz gewechselt, wobei der vorherige Tastenfeld-Satz vollständig verschwindet. Dies gilt auch für die den Tastenfeldern zugeordneten, spezifische Funktionen darstellenden Symbole.

Dieses bekannte Bedienungsteil ist nicht nur aufwendig bezüglich seiner Herstellung und Bedienung, sondern es erfordert auch eine erhöhte Bedienungsaufmerksamkeit, da bei einem Wechsel der Funktionsauswahl sich jeweils ein völlig neues Schalttableau-Bild ergibt.

Der Erfindung liegt die Aufgabe zugrunde, ein Bedienungsteil der eingangs angegebenen Art so auszugestalten, daß bei Gewährleistung einer kleinen Bauweise oder Bedienungsfläche eine große Übersichtlichkeit und einfache Bedienung erreicht wird.

Diese Aufgabe wird durch die Merkmale des Anspruchs 1 gelöst.

Beim erfindungsgemäßen Bedienungsteil sind die insgesamt zur Verfügung stehenden Funktionen unterteilt in häufiger vorkommende Primärfunktionen, wie beispielsweise Einstellung der Speicherebene, Drehzahlverstellung, Einstellung vorprogrammierter Positionen des Patientenstuhls etc., und in weniger häufig benötigte Sekundärfunktionen, wie beispielsweise individuelle Verstellung der Sitzfläche, der Rückenlehne und der Kopfstütze des Patientenstuhles, der Drehzahl bzw. Geschwindigkeit des Behandlungswerkzeugs oder Verstellung bzw. Auslösung von Stoppuhren. Mit den Primärfunktionen belegte Primärfunktions-Schaltelemente sind von der Bedienungsfläche aus ständig betätigbar und mit entsprechenden, die jeweilige Funktion charakterisierenden Symbolen versehen. Die Sekundärfunktionen sind zu einzelnen Funktionsgruppen, wie beispielsweise Verstellung des Patientenstuhls, zusammengefaßt. Jede Funktionsgruppe ist jeweils einem als Auswahl-Schaltelement mit ständig sichtbarem Symbol ausgebildeten Primärfunktions-Schaltelement zugeordnet. Durch Einschalten des oder der Auswahl-Schaltelemente werden die Symbole der mit den jeweils zugeordneten Sekundärfunktionen belegten Sekundärfunktions-Schaltelemente gegenüber den Symbolen der verbleibenden Sekundärfunktions-Schaltelemente optisch auf der Bedienungsfläche hervorgehoben. Auf diese Weise wird dem Benutzer angezeigt, welche Sekundärfunktions-Schaltelemente er einzuschalten hat, um die von ihm durch Einschalten des Auswahl-Schaltelements vorgewählten Funktionen zu wählen. Dies erlaubt es, zumindest die Sekundärfunktions-Schaltelemente auf engstem Raum zusammenzufassen, d.h. auf kleinster Bedienungsfläche zu betätigen und gleichzeitig die Gefahr von Bedienungsfehlern auf ein Minimum herabzusetzen. Die nicht als Auswahl-Schaltelemente ausgebildeten Primärfunktions-Schaltelemente dienen nicht zur Vorwahl, sondern zur direkten Wahl der zugehörigen Funktionen.

Das erfindungsgemäße Bedienungsteil zeichnet sich durch eine kleine, leicht zu bedienende und auch leicht sauber zu haltende Ausgestaltung aus, die sich vorteilhaft integrieren läßt und auch leicht zu überschauen ist.

Insbesondere die zuletzt genannten Vorteile gelten auch für die erfindungsgemäßen Bedienungsteile nach den Ansprüche 2 und 4. Dabei ist bei der Ausgestaltung gemäß Anspruch 2 ein leichtes und gutes Erkennen des oder der betreffenden Symbole möglich, was insbesondere unter Berücksichtigung des beträchtlichen Abstandes, den das Bedienungsteil vom Benutzer während der Behandlung aufweisen kann, von Bedeutung ist. Bei der Ausgestaltung nach Anspruch 4 ist wenigstens ein Funktions-Schaltelement in zweierlei Weise doppelt belegt. Zum einen ist die doppelte Belegung durch die Auswahl mittels des Auswahl-Schaltelements vorgegeben. Eine zweite Doppelbelegung wird dadurch erreicht, daß das betreffende Schaltelement steuerungsmäßig mehreren Auswahl-Schaltelementen zugeordnet ist und die diesem Schaltelement zugeordneten Symbole unterschiedliche Funktionen darstellen. Hierdurch ist es möglich, mehrere Funktionen mit ein und demselben Schaltelement anzusteuern und/oder zu symbolisieren.

Die Auswahl-Schaltelemente oder -Schaltglieder sind insbesondere Menü-Auswahlschaltelemente einer elektronischen Steuereinrichtung.

Vorzugsweise sind die Symbole der den jeweils eingeschalteten Auswahl-Schaltgliedern zugeordneten Sekundärfunktions-Schaltglieder zur optischen Hervorhebung sichtbar und die Symbole der verbleibenden Sekundärfunktions-Schaltglieder unsichtbar.

Alternativ können die Symbole der Sekundärfunktions-Schaltglieder zumindest teilweise ständig sichtbar und die Symbole der den jeweils eingeschalteten Auswahl-Schaltgliedern zugeordneten Sekundärfunktions-Schaltglieder durch Beleuchtung optisch hervorgehoben sein.

Vorzugsweise sind die Symbole der den jeweils eingeschalteten Auswahl-Schaltgliedern zugeordneten Sekundärfunktions-Schaltglieder durch eine Farbkennzeichnung optisch hervorgehoben. Dies erlaubt beispielsweise eine Verstärkung der durch Beleuchtung bereits optisch hervorgehobenen Symbole.

Um die gegenseitige Zuordnung zu kennzeichnen, sind die Symbole der jeweils eingeschalteten Auswahl-Schaltglieder vorteilhafterweise durch Beleuchtung und/oder Farbkennzeichnung optisch hervorgehoben.

Gemäß einer Weiterbildung der Erfindung sind die Symbole der jeweils eingeschalteten Auswahl-Schaltglieder und der zugeordneten Sekundärfunktions-Schaltglieder durch die gleiche Farbkennzeichnung optisch hervorgehoben. Diese Kennzeichnung kann für sämtliche Auswahl-Schaltglieder und zugeordneten Sekundärfunktions-Schaltglieder gleich, sie kann jedoch auch für die einzelnen Auswahl-Schaltglieder und zugeordneten Sekundärfunktions-Schaltglieder unterschiedlich sein.

Vorzugsweise sind den Primärfunktions- und/oder Sekundärfunktions-Schaltgliedern zumindest teilweise wenigstens je eine Funktionsanzeige zugeordnet.

Zur Verringerung der Größe der Bedienungsfläche bei gleichbleibender Bedienungssicherheit ist es günstig, wenn die Sekundärfunktions-Schaltglieder zumindest teilweise mit mehreren Sekundärfunktionen und entsprechenden Symbolen belegt sind. Insbesondere für einen solchen Fall ist eine Ausbildung vorteilhaft, gemäß welcher zumindest die Sekundärfunktions-Schaltglieder, vorzugsweise sämtliche Funktions-Schaltglieder, mittels Tastenfelder in der Bedienungsfläche betätigbar sind.

Vorteilhafterweise bestehen die Tastenfelder aus zwei Schaltfolien aus isolierendem Material, die an den einander zugewandten Seiten mit Leiterbahnen bzw. leitenden Kontakten belegt sind, wobei beide Schaltfolien durch eine aus isolierendem Material bestehende, im Bereich außerhalb der Kontakte angeordnete Abstandshalteeinrichtung getrennt sind und zumindest die zur Außenseite der Bedienungsfläche hingerichtete Schaltfolie flexibel ist.

Vorzugsweise liegt über der äußeren Schaltfolie eine aus flexiblem und zumindest teilweise transparentem Material bestehende Dekorfolie, die mit den Symbolen der Schaltglieder, Funktionsanzeigen, Tastenfeld-Begrenzungen und dgl. versehen ist. Auf diese Weise sind auch die Symbole der Sekundärfunktions-Schaltglieder ständig sichtbar.

Vorteilhafterweise sind die Schaltfolien und gegebenenfalls die Distanzfolie zumindest im Bereich der Symbole der Sekundärfunktions-Schaltglieder transparent, wobei unter der von der Bedienungsfläche abgewandten inneren Schaltfolie zumindest für jedes Symbol der Sekundärfunktions-Schaltglieder eine vom Steuerteil ansteuerbare Leuchteinheit, vorzugsweise eine Leuchtdiode, vorgesehen ist. Auf diese Weise können die Symbole der dem jeweils eingeschalteten Auswahl-Schaltglied zugeordneten Sekundärfunktions-Schaltglieder optisch hervorgehoben werden.

Gemäß einer Weiterbildung der Erfindung ist zwischen der Dekorfolie und der äußeren Schaltfolie ein mit elektrischen Leiterbahnen und Elektroden versehenes flexibles LCID-Element der Fa. Rafi angeordnet, dessen Transparenz durch an die Leiterbahnen und Elektroden angelegte Spannungen veränderbar ist, wobei die Leiterbahnen und Elektroden mit dem Steuerteil verbunden sind und zwischen dem LCID-Element und der äußeren Schaltfolie eine flexible Reflektorfolie angeordnet ist. Eine derartige Ausführung des Bedienungsteils gibt dem Designer völlig Freiheit in der Anordnung und auch in der Farbgebung der Tastenfelder und ihrer Symbole.

Vorteilhafterweise ist die Dekorfolie im Bereich der Sekundärfunktions-Schaltglieder frei von Symbolen und die Symbole der Sekundärfunktions-Schaltglieder sind im entsprechenden Bereich auf der Reflektorfolie ausgebildet. Auf diese Weise ist es möglich, lediglich die Symbole der den jeweils eingeschalteten Auswahl-Schaltgliedern zugeordneten Sekundärfunktions-Schaltglieder sichtbar zu machen, während die Symbole der verbleibenden Sekundärfunktions-Schaltglieder unsichtbar sind.

Vorzugsweise sind die Schaltfolien und gegebenenfalls die Distanzfolie zumindest im Bereich der Symbole transparent, wobei unter der inneren Schaltfolie eine mit der Steuereinheit verbundene Displayeinheit angeordnet ist. Die Displayeinheit kann eine Bildröhre sein. Diese erlaubt es, die auf der Bedienungsfläche angeordneten Symbole jederzeit und in einfacher Weise zu ändern.

Gemäß einer Weiterbildung der Erfindung weist die Bedienungsfläche zusätzlich Platz für die Einblendung von zusätzlichen Bild-, Buchstaben-, Schrift- oder Zahleninformationen auf.

Nachstehend ist die Erfindung anhand dreier Ausführungsbeispiele unter Bezugnahme auf die Zeichnung näher beschrieben. Es zeigen:
- Fig. 1: eine perspektivische Explosionsdarstellung eines ersten Ausführungsbeispiels des erfindungsgemäßen Bedienungsteils,
- Fig. 2: eine Schnittdarstellung des Bedienungsteils nach Fig.1 im zusammengefügten Zustand,
- Fig. 3: eine perspektivische Explosionsdarstellung eines zweiten Ausführungsbeispiels des erfindungsgemäßen Bedienungsteils,
- Fig. 4: eine Schnittdarstellung des Bedienungsteils nach Fig. 3, im zusammengefügten Zustand,
- Fig. 5: eine perspektivische Explosionsdarstellung eines dritten Ausführungsbeispiels des erfindungsgemäßen Bedienungsteils,
- Fig. 6: eine Schnittdarstelung des Bedienungsteils nach Fig. 5 im zusammengefügten Zustand,
- Fig. 7: eine Draufsicht der Bedienungsfläche des Bedienungsteils nach Fig. 1 mit ausgeschalteten Menü-Auswahl-Schaltgliedern,
- Fig. 8: eine Draufsicht der Bedienungsfläche nach Fig.7 mit einem eingeschalteten Menü-Auswahl-Schaltglied,
- Fig. 9: eine Draufsicht der Bedienungsfläche des Bedienungsteils nach Fig. 5 mit ausgeschalteten Menü-Auswahl-Schaltgliedern
- Fig. 10: eine Draufsicht der Bedienungsfläche nach Fig. 9 mit einem eingeschalteten Menü-Auswahl-Schaltglied, und
- Fig. 11: eine Draufsicht der Bedienungsfläche nach Fig .9 mit einem anderen eingeschalteten Menü-Auswahl-Schaltglied.

Jedes in der Zeichnung dargestellte Bedienungsteil ist als Schaltfolientastatur ausgebildet und Bestandteil einer für eine zahnärztliches Behandlungsgerät vorgesehenen Bedienungs-bzw. Steuerkonsole, die ein Steuerteil enthält und zur Steuerung sowie Anzeige der verschiedenen Funktionen des Geräts, wie beispielsweise Kontrolle und Anzeige der Funktionen der Instrumente, der Geschwindigkeit bzw. der Drehzahl eines Behandlungswerkzeugs, der Beleuchtung, der Mundglasfüllung etc., bestimmt sein kann.

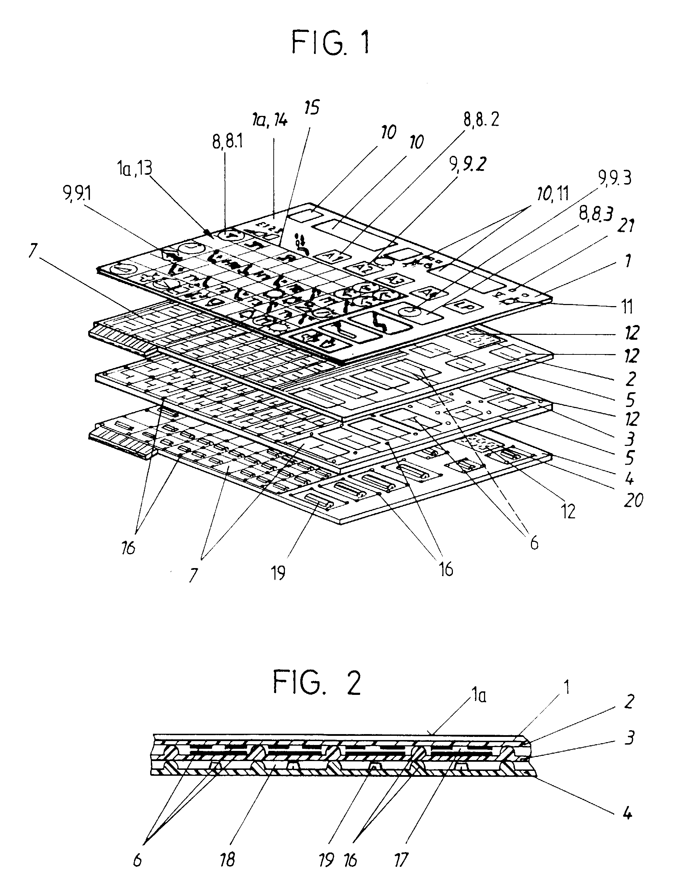

Das Bedienungsteil nach den Fig. 1 und 2 umfaßt eine Dekorfolie 1, eine äußere bzw. obere Schaltfolie 2, eine innere bzw. untere Schaltfolie 3 und eine Grundfolie 4 untereinander angeordnet in dieser Reihenfolge. Sämtliche Folien weisen Felder abgrenzende durchsichtige Begrenzungslinien auf und sind außer der Grundfolie 4 flexibel. Die einem Betrachter zugewandte Oberseite der Dekorfolie 1 stellt eine Bedienungsfläche la des Bedienungsteils dar.

Die Schaltfolien 2 und 3 bestehen aus lichtdurchlässigem Material und sind auf ihren einander zugewandten Seiten mit Leiterbahnen 5 belegt, die Funktions-Schaltglieder darstellende Kontakte 6 aufweisen, die innerhalb von Feldern 7 angeordnet sind und durch Druck auf die jeweils über ihnen befindlichen, als Tastenfelder 8 bezeichneten Felder auf der Bedienungsfläche la in Kontakt miteinander gebracht werden können. Auf der Bedienungsfläche la sind im Bereich der Tastenfelder 8 die Funktionen der jeweils zugeordneten Funktions-Schaltglieder 6 charakterisierende Symbole 9 ausgebildet. Die verbleibenden, auf der Bedienungsfläche la angeordneten Felder ohne zugeordnete Kontakte 6 können Funktionsanzeigefelder 10 sein, deren Funktionen durch zugeordnete Symbole 11 charakterisiert sind. Diesen Funktionsanzeigefeldern 10 sind untereinander Felder 12 auf den verbleibenden Folien 2 bis 4 zugeordnet. Die Felder 7 wiederholen sich mit gleichen Bezugszeichen auf den Schaltfolien 2, 3 und auf der Grundfolie 4. Die Leiterbahnen 5 der oberen Schaltfolie 2 sind in bekannter Weise an eine nicht gezeigte Spannungsquelle und das Steuerteil angeschlossen.

Die Fläche jeder Folie 1 bis 4 ist in einen ersten Flächenbereich 13 und einen zweiten Flächenbereich 14 aufgeteilt. Letzterer erstreckt sich entlang dem oberen und dem rechten seitlichen Rand der jeweiligen Folien 1 bis 4 und ist durch eine Trennlinie 15 von ersterem getrennt. Die einzelnen Felder 7, 8 und 10, 12 können im ersten Flächenbereich 13 direkt nebeneinander in einem Raster und im zweiten Flächenbereich 14 mit größerem gegenseitigen Abstand und somit gegebenenfalls außer Raster angeordnet sein .

Auf den der Dekorfolie 1 zugewandten Oberseite der Schaltfolie 3 und der Grundfolie 4 sind Abstandsstege oder je eine Abstandsnoppe 16 an den Begrenzungslinien oder Schnittstellen des Rasters im ersten Flächenbereich 13 und im Bereich der Begrenzungslinien oder Eckpunkte der Felder 7 im zweiten Flächenbereich 14 angebracht. Diese Abstandsnoppen 16 grenzen zwischen den Folien 2 und 3 Schaltkammern 17 und zwischen den Folien 3 und 4 Aufnahmekammern 18 mit je einer auf der Grundfolie 4 befestigten Leuchtdiode 19 ab. Die Leuchtdioden 19 sind von außen zugänglich und in nicht gezeigter Weise an eine Spannungsquelle und an das Steuerteil angeschlossen. Die Abstandsnoppen 16 auf der oberen Schaltfolie 2 begrenzen den auf ein zugeordnetes Tastenfeld 8 ausgeübten Druck auf die innerhalb der zugehörigen Schaltkammer 17 befindlichen, durch die darunter befindliche Leuchtdiode 19 abgestützten Kontakte 6, so daß nur diese Kontakte 6 in Kontakt gelangen und über das Steuerteil ein Aufleuchten der Leuchtdiode 19 in der darunter befindlichen Aufnahmekammer 18 bewirken, woldurch das zugehörige Symbol 9 beleuchtet und optisch hervorgehoben wird.

Die Grundfolie 4 ist in nicht gezeigter Weise mit einer Anzeigeeinrichtung zur Darstellung alphanumerischer Zeichen 20 in wenigstens einigen Funktionsanzeigeflächen 10 ausgestattet.

Die Dekorfolie 1 besteht aus undurchsichtigem Material und ist an entsprechenden Stellen zur Darstellung der Symbole 9, 11 von Begrenzungslinien für die Felder 8, 10 der Trennlinie 15 sowie von Anzeigenflächen 21 innerhalb von den Feldern 8, 10 lichtdurchlässig ausgebildet.

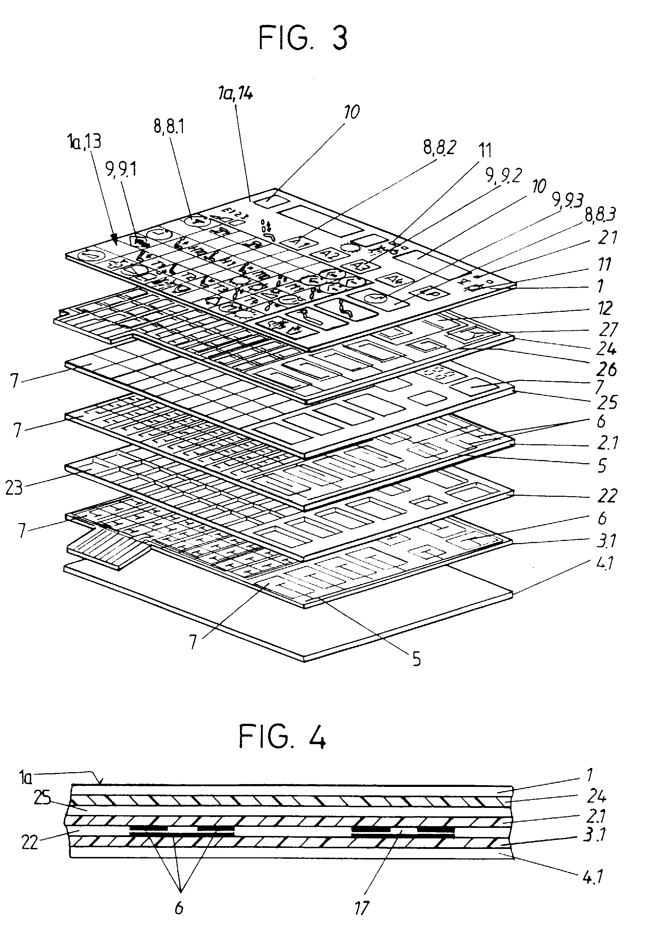

Das Bedienungsteil nach den Fig. 3 und 4 umfaßt Schaltfolien 2.1 und 3.1, die sich durch das Fehlen von Abstandsnoppen 16 von den Schaltfolien 2 und 3 des Bedienungsteils nach den Fig. 1 und 2 unterscheiden. Stattdessen ist eine Distanzfolie 22 zwischen beiden Schaltfolien 2.1 und 3.1 angeordnet, die im Bereich der einzelnen Felder 7, 12 Aussparungen 23 aufweist. Ferner umfaßt das Bedienungsteil nach den Fig. 3 und 4 zusätzlich zur Dekorfolie 1 und den Schaltfolien 2.1 und 3.1 einen zwischen letzteren angeordneten flexiblen Verbund bestehend aus einem sogenannten LCID-Element 24 der Fa. Rafi und einer darunter befindlichen Reflektorfolie 25. Im Unterschied zu der Grundfolie 4 im Bedienungsteil nach den Fig. 1 und 2 hat die Grundfolie 4.1 im Bedienungsteil gemäß den Fig. 3 und 4 lediglich eine Abstützfunktion und ist infolgedessen völlig frei von irgendwelchen Feldern und Leuchtdioden.

Das LCID-Element 24 besteht aus zwei durchsichtigen Kunststoffolien, zwischen denen in einem Polymerfilm eingebettete kleinste Flüssigkristallkugeln angeordnet sind. Beide Kunststoffolien weisen an den gleichen Stellen wie die Folien 1 bis 4 nach Fig. 1 und 2 die gleichen abgegrenzten Felder 7, 12 auf und sind mit durchsichtigen Leiterbahnen 26 und Elektroden 27 beschichtet. Bei nicht an eine Spannungsquelle angeschlossenen Elektroden 27 sind die Flüssigkristall-Moleküle an den Oberflächen der Flüssigkristallkugeln ausgerichtet, so daß auftreffendes Licht gestreut und absorbiert wird und auf diese Weise das Element 24 lichtundurchlässig ist. Sobald eine Spannung an die Elektroden 27 angelegt wird, erfolgt eine Orientierung der Flüssigkristallmoleküle innerhalb des zugeordneten Feldes 7 entlang der Feldlinie, so daß durch die Dekorfolie 1 einfallendes Licht durch den Polymerfilm hindurchtritt und an der Reflektorfolie 25 reflektiert wird, um das betreffende Feld 8 oder 10 bzw. das in ihm befindliche Symbol 9 oder 11 von unten zu beleuchten.

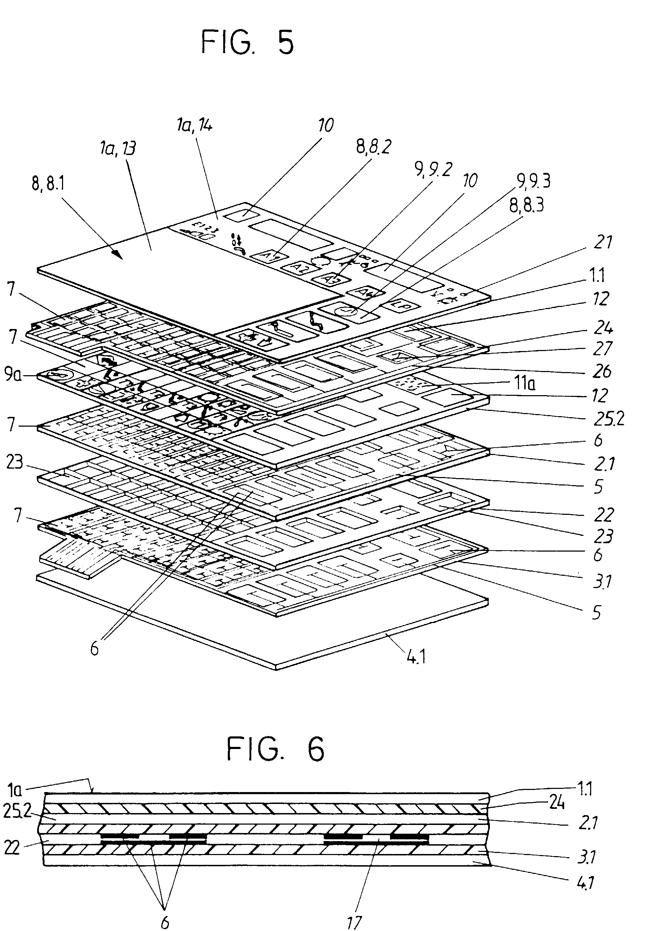

Das Bedienungsteil nach den Fig. 5 und 6 umfaßt eine Dekorfolie 1.1, die im Unterschied zur Dekorfolie 1 der vorbeschriebenen Bedienungsteile keine Symbole 9, 11 im ersten Flächenbereich 13 und gegebenenfalls auch im Flächenbereich 14 aufweist. Stattdessen sind diese Symbole mit den Bezugszeichen 9a, 11a auf der Reflektorfolie 25 angebracht. Die Symbole 9a, 11a sind in Fig. 5 deutlich gezeigt.

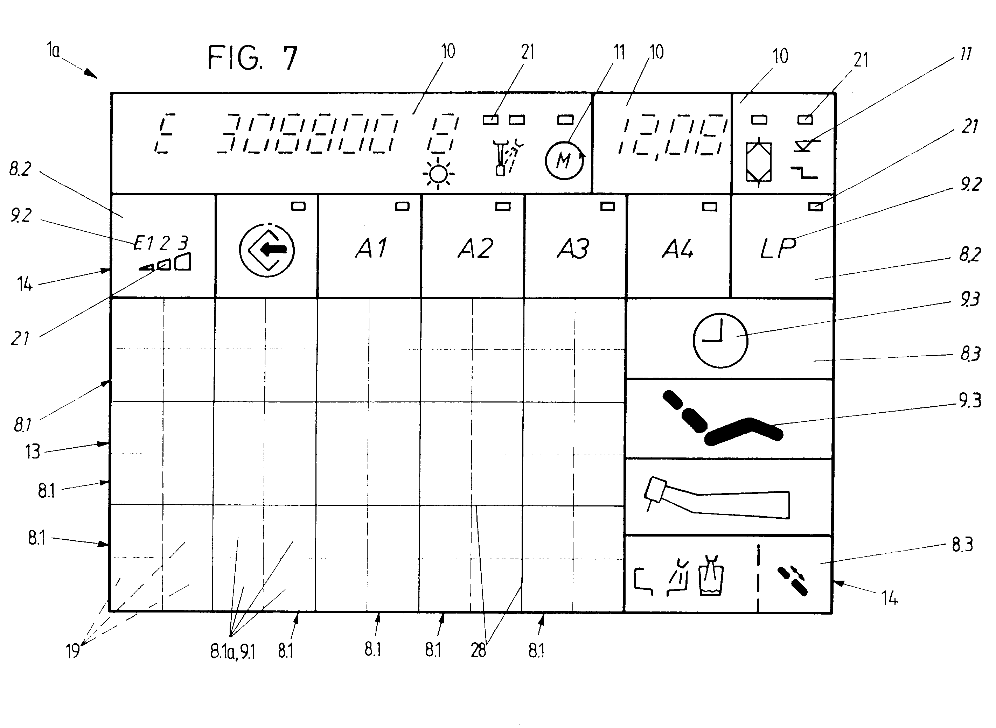

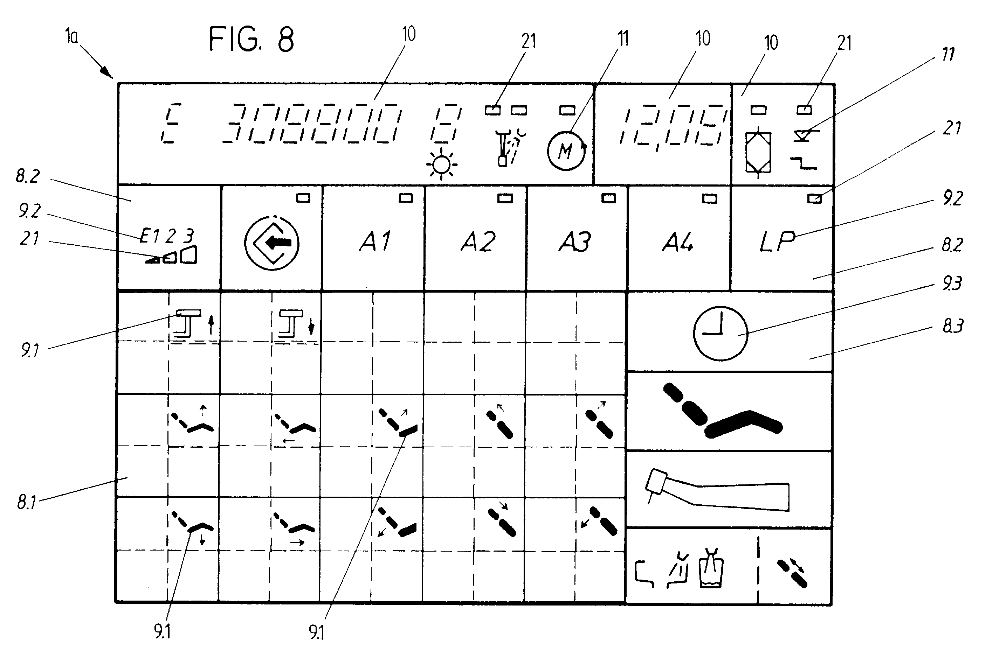

Die lediglich schematisch gezeigte Bedienungsfläche 1a des Bedienungsteils nach Fig. 1 und 2 ist in den Fig. 7 und 8 vergrößert dargestellt.

Die Bedienungsfläche 1a umfaßt im ersten Flächenbereich 13 fünfzehn sogenannte Sekundärfunktions-Tastenfelder 8.1, denen jeweils ein Schalter (Kontaktelemente 6) zugeordnet ist, und die in drei Reihen durch Begrenzungslinien 28 getrennt angeordnet und mit mehreren hier je vier Sekundärfunktionen belegt sind. Zu diesem Zweck sind jedem Sekundärfunktions-Tastenfeld 8.1 vier Tastenteilfelder 8.1a in einer durch gestrichelte Linien angedeuteten quadratischen Anordnung und vier Leuchtdioden 19 unterschiedlicher Farbe in entsprechender Anordnung zugeordnet. Ferner sind in jedem Sekundärfunktions-Tastenfeld 8.1 der quadratischen Anordnung folgend, vier entsprechende Symbole 9.1 zugeordnet, die entsprechend den vorbeschriebenen Ausführungsbeispielen gemäß Fig. 1 bis 4 angeordnet sein können. Die Begrenzungslinien 28 und die Symbole 9.1 sind, z.B. gegen den hellen Untergrund der Leuchtdioden 19 ständig sichtbar, jedoch zur Verdeutlichung der optischen Abhebung in den Fig. 7 und 8 nicht gezeigt.

Im zweiten Flächenbereich 14 entlang dem oberen Rand der Bedienungsfläche 1a sind in einer oberen Reihe nebeneinander drei Funktionsanzeigefelder 10 und in einer darunter befindlichen unteren Reihe sogenannte Primärfunktions-Tastenfelder 8.2 angeordnet, die beide mit ebenfalls ständig sichtbaren alphanumerischen bzw. graphischen Symbolen 11 bzw. 9.2 sowie Anzeigeflächen 21 versehen sind.

Im verbleibenden Teil des zweiten Flächenbereichs 14 sind untereinander vier weitere Primärfunktions-Tastenfelder angeordnet, die als Menü-Auswahl-Tastenfelder 8.3 bezeichnet und mit ebenfalls ständig sichtbaren Symbolen 9.3 versehen sind. Den Primärfunktions-Tastenfeldern 8.2, den Sekundärfunktions-Tastenfeldern 8.1 sowie den Menü-Auswahl-Tastenfeldern 8.3. sind vorbeschriebene Funktions-Schaltglieder 6 zugeordnet.

Die Primärfunktions-Tastenfelder 8.2 dienen von links nach rechts zur Wahl einer von drei Speicherebenen, zur Speicheraktivierung, zur Wahl von vier eingespeicherten Positionen des Patientenstuhls sowie mit der LP-Taste zur Einstellung der jeweils letzten Position des Patientenstuhls.

Im linken Funktionsanzeigefeld 10 werden mit alphanumerischen Zeichen von links nach rechts die jeweils gewählte Speicherebene, die jeweils eingestellte Motordrehzahl und die jeweils eingestellte Kaltlichtintensität - über dem Symbol der Sonne - sowie mit Anzeigeflächen 21 die Sprayanzeige (Wasser-Spray-Luft) sowie die Drehrichtung des Motors über den entsprechenden Symbolen 11 angezeigt. Das mittlere Feld 10 zeigt die Uhrzeit. Im rechten Feld 10 wird mit den entsprechenden Symbolen 11 angezeigt, ob die Intensiventkeimung für welche Teile eingeschaltet ist.

Jedem Menü-Auswahl-Tastenfeld 8.3 ist eine Gruppe von Sekundärfunktionen zugeordnet, nämlich in der Reihenfolge von oben nach unten: Einstellung und Auslösung der Stoppuhr, Verstellung des Patientenstuhls, Kontrolle der Funktionen der Instrumente, verschiedene Funktionen, wie beispielsweise Mundspülung,Spülung der Speischale etc.. Die Menü-Auswahl-Tastenfelder 8.3 dienen zur Vorwahl der einzelnen Sekundärfunktionsgruppen, während die einzelnen Sekundärfunktionen innerhalb jeder Sekundärfunktionsgruppe mit den zugehörigen Sekundärfunktions-Tastenfeldern 8.1 angewählt werden.

Die Funktion des erfindungsgemäßen Bedienungsteils ist wie folgt:
Nachdem ein Patient im Patientenstuhl Platz genommen hat, drückt der Zahnarzt auf dasjenige der mit den Symbolen Al bis A4 gekennzeichneten Primärfunktions-Tastenfelder 8.2, welches der Größe des Patienten und der Art der durchzuführenden Behandlung angemessen erscheint, um die entsprechende Funktion auszulösen und den Patientenstuhl in die gewünschte Position zu verstellen. Wenn der Zahnarztnun feststellt, daß die eingestellte Position nicht optimal ist, kann er durch Druck auf das Menü-Auswahl-Tastenfeld 8.3 mit dem Symbol "Patientenstuhl" das zugeordnete Funktions-Schaltglied 6 einschalten und dadurch zwölf mit den jeweils zugeordneten kundärfunktionen der Verstellung des Patientenstuhls belegte Sekundärfunktions-Schaltglieder 6 vorwählen. Dies wird z.B. durch Aufleuchten von zwölf in den rechten oberen Quadraten der zugehörigen Aufnahmekammern 18 befindlichen Leuchtdioden 19 und damit der entsprechenden Symbole 9.1 der zugeordneten Sekundärfunktions-Tastenfelder 8.1 bzw. 8.1a angezeigt, die auf diese Weise optisch hervorgehoben sind gegenüber den unbeleuchteten Symbolen 9.1 im ersten Flächenbereich 13 und den Symbolen 11 sowie 9.2 und 9.3, außer dem ebenfalls in gleicher Farbe aufleuchtenden Symbol 9.3 "Patientenstuhl" des betätigten Menü-Auswahl-Tastenfeldes. Die aufleuchtenden Symbole 9.1 sind, wie deutlich in Fig. 8 zu erkennen, zwei das Absenken und Anheben des Patientenstuhls anzeigende Symbole, vier Symbole, die das Anheben, Absenken, Vorwärts- und Rückwärtsverschieben der Sitzfläche sowie das Anheben und Absenken der Rückenlehne anzeigen, sowie vier das Vor- und Zurückschieben und das Anheben und Absenken der Kopfstütze oder des Behandlungsstuhls anzeigende Symbole. Der Zahnarzt drückt nun zur Durchführung der gewünschten Verstellung des Patientenstuhls, beispielsweise Anheben der Sitzfläche, auf das durch das entsprechende Symbol 9.1 beleuchtete Sekundärfunktions-Tastenfeld 8.1 und löst dadurch die gewünschte Funktion aus.

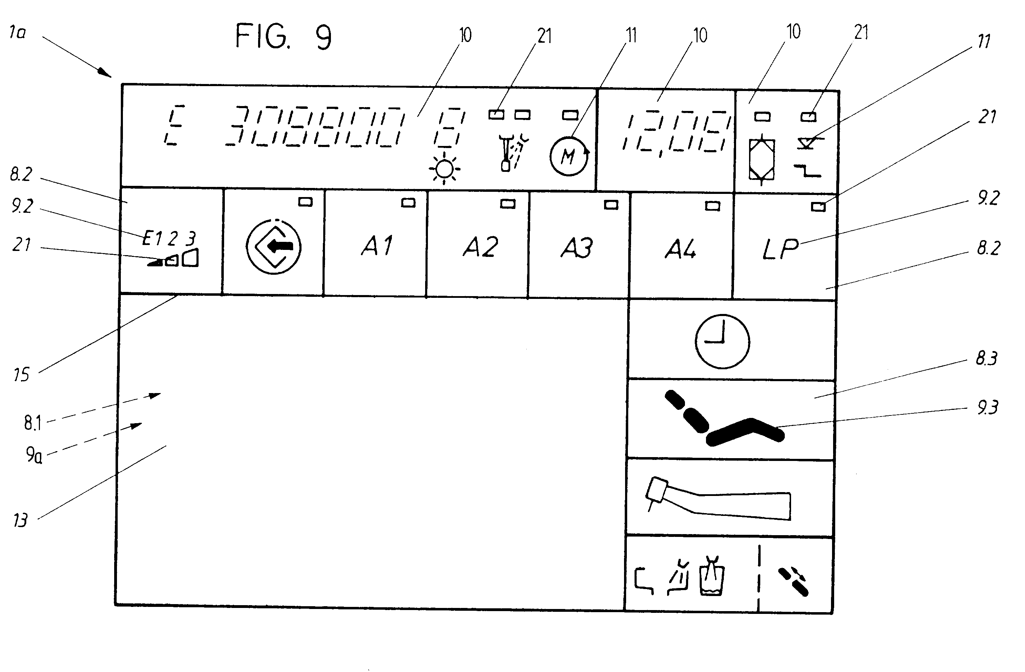

Die lediglich schematisch gezeigte Bedienungsfläche la des Bedienungsteils nach Fig. 5 und 6 ist in den Fig. 9 bis 11 detailliert dargestellt. Sie unterscheidet sich aufgrund der Verwendung des LCID-Elements 24 und der Reflektorfolie 25 anstelle der Leuchtdioden 19 von der Bedienungsfläche la nach den Fig. 7 und 8 durch das Fehlen der Begrenzungslinien 28 und der Symbole 9.1 im ersten Flächenbereich 13, wird jedoch in gleicher Weise wie diese bedient.

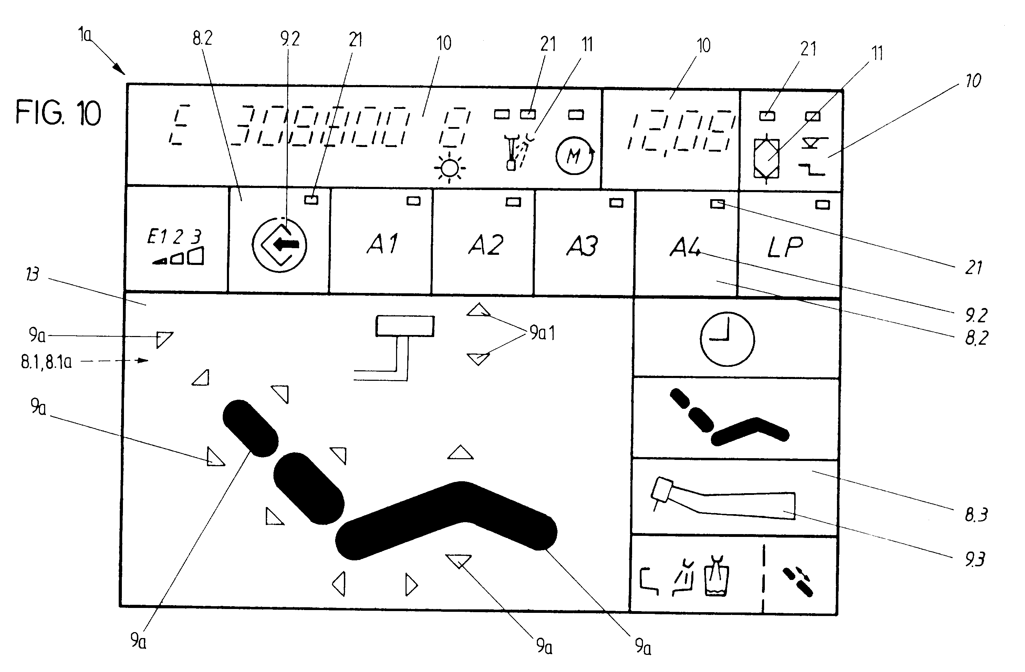

Demzufolge wird durch Druck auf das Menü-Auswahl-Tastenfeld 8.3 mit dem Symbol "Patientenstuhl" ebenfalls das zugeordnete Funktions-Schaltglied 6 eingeschaltet und zwölf mit den jeweils zugeordneten Sekundärfunktionen der Verstellung des Patientenstuhls belegte Sekundärfunktions-Schaltglieder 6 vorgewählt. Gleichzeitig wird der Polymerfilm in den zugehörigen Feldern 7 des LCID-Elements 24 lichtdurchlässig, so daß lediglich die unter diesen Feldern 7 auf der Reflektorfolie 25 ausgebildeten Symbole 9a von dem durch die Dekorfolie 1 und diese lichtdurchlässigen Felder 7 des Polymerfilms einfallenden Licht auf die Bedienungsfläche la projiziert und auf diese Weise, wie in Fig. 10 zu erkennen, optisch hervorgehoben sind. Auf die gleiche Weise wird das auf der Dekorfolie 1.1 angeordnete Symbol 9.3 des betätigten Menü-Auswahl-Tastenfeldes 8.3 mit reflektiertem Licht gleicher Farbe beleuchtet und dadurch gegenüber den verbleibenden, mit Licht anderer Farbe beleuchteten Symbolen 11 und 9.2 optisch hervorgehoben.

Die im ersten Flächenbereich 13 erscheinenden Symbole 9a sind eine schematische Darstellung des Patientenstuhls mit Kopfstütze, Rücklehne und Sitzfläche, zwölf Dreiecke, die diesen Einzelteilen zugeordnet sind, deren Verstellrichtungen anzeigen und zugleich als Sekundärfunktions-Tastenfelder 8.1 bzw. 8.1a dienen, sowie zwei weitere Dreiecke bzw. Tastenfelder mit zugeordnetem Symbol 9a1, die das Anheben und Absenken des Patientenstuhls als Ganzes anzeigen. Der Zahnarzt drückt nun zur Durchführung der gewünschten Verstellung des Patientenstuhls, beispielsweise Anheben der Sitzfläche, auf das durch das in die entsprechende Richtung weisende Dreieck gekennzeichnete Sekundärfunktions-Tastenfeld -Tastenfeld 8.1 und löst dadurch die gewünschte Funktion aus.

Es ist gemäß Fig. 10 möglich, das oder die Symbole 9a oder 9.1, hier ein Patientenstuhl und/oder Behandlungsstuhl, so groß zu bemessen, daß es sich über mehrere Sekundärfunktions-Tastenfelder 8.1 erstreckt. Hierdurch ist es möglich, solche Symbole, hier Bewegungspfeile, die als Teile des großen Symbols 9.a zugeordnet sind, auf unterschiedlichen Tastenfeldern 8.1 vorzusehen. Es sind somit Teile des Symbolgegenstandes individuell darstellbar und/oder ansteuerbar, ohne daß die durch die Größe einer Fingerkuppe vorgegebene Tastenfeldgröße über- oder unterschritten zu werden braucht..

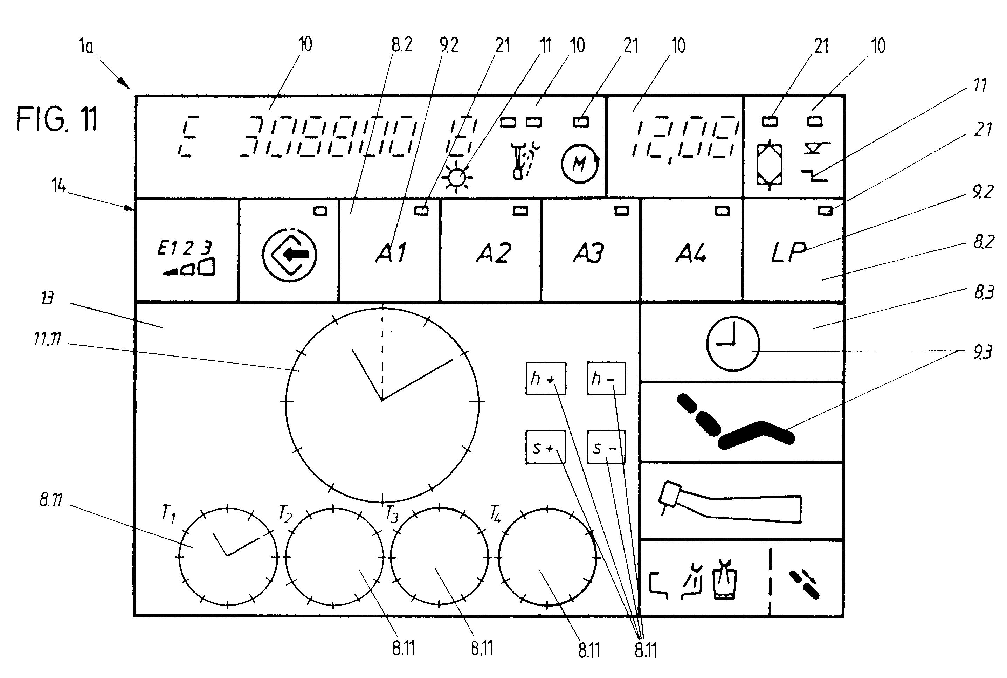

Nach beendigter Verstellung des Patientenstuhls kann der Zahnarzt durch Druck auf das mit dem Symbol "Patientenstuhl" gekennzeichnete Menü-Auswahl-Tastenfeld 8.3 die zugeordneten Sekundärfunktions-Schaltglieder 6 ausschalten. Dasselbe Ergebnis mit gleichzeitigem Vorwählen der Gruppe der Stoppuhrfunktionen erzielt der Zahnarzt durch Druck auf das Menü-Auswahl-Tastenfeld 8.3, welches mit dem durch die Druckausübung aufleuchtenden Symbol "Stoppuhr" charakterisiert ist. Wie in Fig. 11 gezeigt, leuchten im ersten Flächenbereich 13 eine Funktionsanzeige in Form eines Stoppuhrsymbols 11.11, vier darunter befindliche, mit Symbolen T1 bis T4 charakterisierte Sekundärfunktions-Tastenfelder 8.11 in Form von kleineren Stoppuhrdarstellungen sowie vier weitere rechteckige Sekundärfunktions-Tastenfelder 8.11 auf. Letztere sind mit den Symbolen "h+", "h-", "s+" und "s-" charakterisiert und dienen zur Zeiteinstellung derjenigen Stoppuhrdarstellung T1 bis T4, die zuvor durch Druck auf das von ihr dargestellte Sekundärfunktions-Tastenfeld 8.11 eingeschaltet wurden. Durch Sekundärfunktions-Tastenfelder 8.11 beginnt die in der Funktionsanzeige dargestellte Stoppuhr 11.11 zu laufen und läßt bei Ablauf der eingestellten Zeit ein Signal ertönen.

## Patentansprüche

1. Bedienungsteil für einen zahnärztlichen Behandlungsplatz mit einem Behandlungsstuhl zur zahnärztlichen Behandlung mit einem Handstück, das ein Behandlungwerkzeug aufweist, mit
- auf einem Bedienungstableau (1a) betätigbaren, an ein Steuerteil für den Behandlungsplatz angeschlossenen Funktions-Schaltelementen (8),
- denen Gerätefunktionen charakterisierende Symbole (9) zugeordnet sind,
- wobei durch funktionelle Doppelbelegung von Funktions-Schaltelementen die Anzahl der Funktions-Schaltelemente (8) geringer als die Anzahl der schaltbaren Funktionen gehalten werden kann,
- und die Doppelbelegung durch wenigstens ein Auswahl-Schaltelement (8.3) ausführbar ist,
**dadurch gekennzeichnet,**
- daß das Bedienungsteil eine Schaltfolientastatur aufweist, in die die Funktions-Schaltelemente (8) als die Symbole enthaltende Tastenfelder (7) integriert sind,
- daß die Funktions-Schaltelemente (8) Primärfünkfions-Schaltelemente (8.2) und Sekundarfunktions-Schaltelemente (8.1) umfassen,
- daß ein Teil der Primärfünktions-Schaltelemente Auswahl-Schaltelemente (8.3) sind, deren Symbole (9.3) ständig sichtbar sind und denen je eine Gruppe von Sekundärfunktions-Schaltelementen (8.1) zugeordnet ist,
- daß die Symbole (9.1) derjenigen Sekundärfünktions-Schaltelemente (8.1), die jeweils eingeschaltenen Auswahl-Schaltelementen (8.3) zugeordnet sind, zumindest gegenüber den Symbolen der verbleibenden SekundärfunktionsSchaltelemente (8.1) optisch hervorgehoben sind,
- und daß ein Auswahl-Schaltelement (8.3) der Auswahl einer Gruppe von Sekundärfünktions-Schaltelementen (8.1) zum Steuern des Behandlungsplatzes dient.

2. Bedienungsteil nach Anspruch 1, dadurch gekennzeichnet, daß das wenigstens eine nach Betätigung des Auswahl-Schaltelements (8.3) die zugehörige Funktion darstellende Symbol (9a) größer bemessen ist, als ein Tastenfeld der Sekundärfunktions-Schaltelemente (8.1) und sich vorzugsweise über mehrere Tastenfelder erstreckt.

3. Bedienungsteil nach Anspruch 2, dadurch gekennzeichnet, daß dem vergrößerten Symbol (9a) auf den Tastenfeldern der Sekundärfunktions-Schaltelemente (8.1) zugehörige Korrespondenz-Symbole (9a) zugeordnet sind.

4. Bedienungsteil nach einem der vorherigen Ansprüche dadurch gekennzeichnet, daß einem oder mehreren Sekundärfunktions-Schaltelementen (8.1) mehrere Symbole (9.1) zugeordnet sind, von denen jedes einer durch ein oder mehrere Auswahl-Schaltelemente (8.3) vorgegebene Funktion entspricht.

5. Bedienungsteil nach einem der vorhergehenden Ansprüche, dadurch gekennzeichnet,
daß die Symbole (9.1, 9.11) der den jeweils eingeschalteten Auswahl-Schaltelementen (8.3) zugeordneten Sekundärfunktions-Schaltelemente (8.1) zur optischen Hervorhebung sichtbar und die Symbole der verbleibenden Sekundärfunktions-Schaltelemente unsichtbar sind (Fig. 5, 6 und 9 bis 11).

6. Bedienungsteil nach einem der vorhergehenden Ansprüche, dadurch gekennzeichnet,
daß die Symbole (9.1) der Sekundärfunktions-Schaltelemente (8.1) zumindest teilweise ständig sichtbar und die Symbole (9.1) der den jeweils eingeschalteten Auswahl-Schaltelementen (8.3) zugeordneten Sekundärfunktions-Schaltelemente (8.1) durch Beleuchtung (19) optisch hervorgehoben sind (Fig. 1 bis 4).

7. Bedienungsteil nach einem der vorhergehenden Ansprüche, dadurch gekennzeichnet,
daß die Symbole (9.3) der den jeweils eingeschalteten Auswahl-Schaltelementen (8.3) zugeordneten Sekundärfunktions-Schaltelemente (8.1) durch eine Farbkennzeichnung (19, 25) optisch hervorgehoben sind.

8. Bedienungsteil nach Anspruch 6 oder 7,
dadurch gekennzeichnet,
daß die Symbole (9.3) der jeweils eingeschalteten Auswahl-Schaltelemente (8.3) und der zugeordneten Sekundärfunktions-Schaltelemente (9.1) durch die gleiche Farbkennzeichnung optisch hervorgehoben sind.

9. Bedienungsteil nach einem der vorhergehenden Ansprüche,
dadurch gekennzeichnet,
daß den Primärfunktions-Schaltelementen (8.2, 8.3) und/oder Sekundärfunktions-Schaltelementen (8.1) zumindest teilweise wenigstens je eine Funktionsanzeige (10, 21) zugeordnet sind.

10. Bedienungsteil nach einem der vorhergehenden Ansprüche,
dadurch gekennzeichnet,
daß die Sekundärfunktions-Schaltelemente (8.1) zumindest teilweise mit mehreren Sekundärfunktionen und entsprechenden Symbolen (9.1) belegt sind (Fig. 7 und 8).

11. Bedienungsteil nach Anspruch 10,
dadurch gekennzeichnet,
daß die Tastenfelder (8.1, 8.11, 8.2, 8.3) aus zwei Schaltfolien (2, 3) bestehen, die an den einander zugewandten Seiten mit vorzugsweise aufgedampften Leiterbahnen (5) bzw. leitenden Kontakten (6) belegt sind, daß beide Schaltfolien (2, 3) durch eine aus isolierendem Material bestehende, im Bereich außerhalb der Kontakte (6) angeordnete Abstandshalteeinrichtung (16, 22) getrennt sind und zumindest die zur Außenseite der Bedienungsfläche hin gerichtete äußere Schaltfolie (2) flexibel ist.

12. Bedienungsteil nach Anspruch 11,
dadurch gekennzeichnet,
daß die Abstandshalteeinrichtung (16) aus Abstandsstegen oder -noppen (16) besteht, die an einer oder beiden Schaltfolien (2, 3) angebracht sind.

13. Bedienungs nach Anspruch 11 oder 12,
dadurch gekennzeichnet,
daß die Abstandshalteeinrichtung (22) aus einer Distanzfolie (22) besteht, die im Bereich der Kontakte (6) Aussparungen (23) aufweist.

14. Bedienungsteil nach einem der Ansprüche 11 bis 13,
dadurch gekennzeichnet,
daß über der äußeren Schaltfolie (2) eine aus flexiblem und zumindest teilweise transparentem Material bestehende Dekorfolie (1) liegt, die mit den Symbolen (9.1, 9.2, 9.3) für die Schaltelemente (8.1, 8.2, 8.3), Funktionsanzeigen (10, 21), Funktion-Begrenzungen (28) und dgl. versehen ist.

15. Bedienungsteil nach Anspruch 14,
dadurch gekennzeichnet,
daß die Schaltfolien (2, 3) und gegebenenfalls die Distanzfolie (22) zumindest im Bereich der Symbole (9.1) der Sekundärfunktions-Schaltelemente (8.1) transparent sind, und daß unter der von der Bedienungsfläche abgewandten inneren Schaltfolie (3) zumindest für jedes Symbol (9.1) der Sekundärfunktions-Schaltglieder (6) eine vom Steuerteil ansteuerbare Leuchteinheit (19) vorgesehen ist.

16. Bedienungsteil nach Anspruch 15,
dadurch gekennzeichnet,
daß die Beleuchtungseinheit (19) wenigstens eine Leuchtdiode (19) enthält.

17. Bedienungsteil nach einem der vorhergehenden Ansprüche,
dadurch gekennzeichnet,
daß zwischen der Dekorfolie (1) und der äußeren Schaltfolie (2) ein mit elektrischen Leiterbahnen (26) und Elektroden (27) versehenes flexibles LCID-Element (24) der Fa. Rafi vorgesehen ist, dessen Transparenz durch an die Leiterbahnen (26) und Elektroden (27) angelegte Spannungen veränderbar ist, daß die Leiterbahnen (26) und Elektroden (27) mit dem Steuerteil verbunden sind, und daß zwischen dem LCID-Element (24) und der äußeren Schaltfolie (2) eine flexible Reflektorfolie (25) angeordnet ist.

18. Bedienungsteil nach Anspruch 17,
dadurch gekennzeichnet,
daß die Dekorfolie (1) im Bereich der Sekundärfunktions-Schaltelemente (8.1) frei von Symbolen ist, und daß die Symbole (9 d) der Sekundärfunktions-Schaltelemente (8.1) im entsprechenden Bereich der Reflektorfolie (25) ausgebildet sind.

19. Bedienungsteil nach einem der Ansprüche 11 bis 18,
dadurch gekennzeichnet,
daß die Schaltfolien (2, 3) und gegebenenfalls die Distanzfolie (22) zumindest im Bereich der Symbole (9, 11) transparent sind, und daß unter der inneren Schaltfolie (3) eine mit der Steuereinheit verbundene Displayeinheit angeordnet ist.

20. Bedienungsteil nach Anspruch 19,
dadurch gekennzeichnet,
daß die Displayeinheit eine Bildröhre ist.

21. Bedienungsteil nach einem der vorhergehenden Ansprüche,
dadurch gekennzeichnet,
daß die Bedienungsfläche zusätzlich Platz für die Einblendung von zusätzlichen Bild-, Buchstaben-, Schriftoder Zahleninformationen aufweist, die durch eine Einrichtung zum Zuführen und Darstellen der Informationen an der Bedienungsfläche sichtbar übertragbar sind.

## Claims

1. Operating part for a dental treatment station with a treatment chair for the purpose of dental treatment with a hand piece which has a treatment tool, the said operating part having
- function-switching elements (8) which can be actuated on an operating panel (1a) and are connected to a control part for the treatment station,
- and with which symbols (9) characterising apparatus functions are associated,
- wherein the number of function-switching elements (8) can be kept lower than the number of switchable functions by functional double occupancy of function-switching elements,
- and the double occupancy can be performed by at least one selection-switching element (8.3),
**characterised in that**
- the operating part has a switching film keyboard into which the function-switching elements (8) are integrated as keying fields (7) containing the symbols,
- that the function-switching elements (8) comprise primary-function-switching elements (8.2) and secondary-function-switching elements (8.1),
- that some of the primary-function-switching elements are selection-switching elements (8.3), the symbols (9.3) of which are constantly visible and with each of which there is associated a group of secondary-function-switching elements (8.1),
- that the symbols (9.1) of those secondary-function-switching elements (8.1) which are associated with selection-switching elements (8.3) that are switched on at any given time, are made visually prominent compared with the symbols of the remaining secondary-function-switching elements (8.1),
- and that a selection-switching element (8.3) serves for selecting a group of secondary-function-switching elements (8.1) for controlling the treatment station.

2. Operating part according to claim 1,
characterised in that
the symbol (9a), of which there is at least one, that represents the appertaining function after actuation of the selection-switching element (8.3), is of greater dimensions than one keying field of the secondary-function-switching elements (8.1), and preferably extends over a number of keying fields.

3. Operating part according to claim 2,
characterised in that
appertaining correspondence symbols (9a) are associated with the enlarged symbol (9a) on the keying fields of the secondary-function-switching elements (8.1).

4. Operating part according to one of the preceding claims,
characterised in that
a number of symbols (9.1), each of which corresponds to a function predetermined by one or more selection-switching elements (8.3), are associated with one or more secondary-function-switching elements (8.1).

5. Operating part according to one of the preceding claims,
characterised in that
the symbols (9.1, 9.11) of those secondary-function-switching elements (8.1) which are associated with the selection-switching elements (8.3) that are switched on at any given time, are visible for the purpose of imparting visual prominence, and the symbols of the remaining secondary-function-switching elements are invisible (figures 5, 6 and 9 to 11).

6. Operating part according to one of the preceding claims,
characterised in that
the symbols (9.1) of the secondary-function-switching elements (8.1) are, at least in some cases, constantly visible, and the symbols (9.1) of those secondary-function-switching elements (8.1) which are associated with the selection-switching elements (8.3) that are switched on at any given time, are made visually prominent by illumination (19) (figures 1 to 4).

7. Operating part according to one of the preceding claims,
characterised in that
the symbols (9.3) of those secondary-function-switching elements (8.1) which are associated with the selection-switching elements (8.3) that are switched on at any given time, are made visually prominent by colour coding (19, 25).

8. Operating part according to claim 6 or 7,
characterised in that
the symbols (9.3) of the selection-switching elements (8.3) that are switched on at any given time and of the associated secondary-function-switching elements (9.1) are made visually prominent by the same colour coding.

9. Operating part according to one of the preceding claims,
characterised in that
there are associated with the primary-function-switching elements (8.2, 8.3) and/or the secondary-function-switching elements (8.1), at least in some cases, at least one function display (10, 21) each.

10. Operating part according to one of the preceding claims,
characterised in that
the secondary-function-switching elements (8.1) are, at least in some cases, occupied with a number of secondary functions and corresponding symbols (9.1) (figures 7 and 8).

11. Operating part according to claim 10,
characterised in that
the keying fields (8.1, 8.11, 8.2, 8.3) consist of two switching films (2, 3) which are coated, on those sides which face towards one another, with printed circuit tracks (5), which are preferably vaporised on, or with conducting contacts (6), and that the two switching films (2, 3) are separated by a spacing arrangement (16, 22) consisting of insulating material and disposed in the region outside the contacts (6), and at least that outer switching film (2) which is directed towards the outer side of the operating face is flexible.

12. Operating part according to claim 11,
characterised in that
the spacing arrangement (16) consists of distance webs or distance knobs (16) which are attached to one or both of the switching foils (2, 3).

13. Operating part according to claim 11 or 12,
characterised in that
the spacing arrangement (22) consists of a distance film (22) which has cutout portions (23) in the region of the contacts (6).

14. Operating part according to one of claims 11 to 13,
characterised in that
there lies, above the outer switching film (2), a decorative film (1) which consists of flexible and at least partially transparent material and which is provided with the symbols (9.1, 9.2, 9.3) for the switching elements (8.1, 8.2, 8.3), function displays (10, 21), function boundaries (28) and the like.

15. Operating part according to claim 14,
characterised in that
the switching films (2, 3) and, optionally, the distance film (22) are transparent, at least in the region of the symbols (9.1) of the secondary-function-switching elements (8.1), and that a light-emitting unit (19) which can be activated by the control part is provided, at least for each symbol (9.1) of the secondary-function-switching members (6), under that inner switching film (3) which faces away from the operating face.

16. Operating part according to claim 15,
characterised in that
the illuminating unit (19) contains at least one light-emitting diode (19).

17. Operating part according to one of the preceding claims,
characterised in that
there is provided, between the decorative film (1) and the outer switching film (2), a flexible LCID element (24) by the Rafi company, which is provided with electrical printed circuit tracks (26) and electrodes (27) and the transparency of which can be varied by voltages applied to the printed circuit tracks (26) and electrodes (27), that the printed circuit tracks (26) and electrodes (27) are connected to the control part, and that a flexible reflector film (25) is disposed between the LCID element (24) and the outer switching film (2).

18. Operating part according to claim 17,
characterised in that
the decorative film (1) is devoid of symbols in the region of the secondary-function-switching elements (8.1), and that the symbols (9 d) of the secondary-function-switching elements (8.1) are constructed in the corresponding region of the reflector film (25).

19. Operating part according to one of claims 11 to 18,
characterised in that
the switching films (2, 3) and, optionally, the distance film (22) are transparent, at least in the region of the symbols (9, 11), and that a display unit connected to the control unit is disposed under the inner switching film (3).

20. Operating part according to claim 19,
characterised in that
the display unit is a picture tube.

21. Operating part according to one of the preceding claims,
characterised in that
the operating face has additional space for the fading-in of additional picture, character, written or numerical data which can be transmitted in a visible manner by an arrangement for feeding-in and representing the data on the operating face.

## Revendications

1. Partie de contrôle pour une installation de traitement dentaire comprenant un fauteuil de traitement pour le traitement dentaire à l'aide d'une pièce à main portant un outil de traitement, présentant :
- des éléments de contact de fonctions (8) qui peuvent être actionnés sur un panneau de contrôle (1a), qui sont raccordés à une partie de commande pour l'installation de traitement,
- et auxquels sont associés des symboles (9) caractérisant des fonctions d'appareils,
- une double attribution de fonctions à des éléments de contact de fonctions permettant de réduire le nombre des éléments de contact de fonctions (8) par rapport au nombre de fonctions à commander,
- et la double attribution pouvant être réalisée par au moins un élément de contact de sélection (8.3),
caractérisée par le fait,
- que la partie de contrôle présente un clavier à films auquel les éléments de contact de fonctions (8) sont intégrés en tant que champs de touches (7) contenant les symboles,
- que les éléments de contact de fonctions (8) comprennent des éléments de contact de fonctions primaires (8.2) et des éléments de contact de fonctions secondaires (8.1),
- qu'une partie des éléments de contact de fonctions primaires sont des éléments de contact de sélection (8.3) dont les symboles (9.3) sont visibles en permanence et auxquels est respectivement associé un groupe d'éléments de contact de fonctions secondaires (8.1),
- que les symboles (9.1) de ceux des éléments de contact de fonctions secondaires (8.1) auxquels sont respectivement associés des éléments de contact de sélection (8.3) fermés sont optiquement accentués au moins par rapport aux symboles des éléments de contact de fonctions secondaires (8.1) restants,
- et qu'un élément de contact de sélection (8.3) sert à la sélection d'un groupe d'éléments de contact de fonctions secondaires (8.1) pour la commande de l'installation de traitement.

2. Partie de contrôle suivant la revendication 1,
caractérisée par le fait
que le symbole (9a) qui, après l'actionnement de l'élément de contact de sélection (8.3), représente la fonction correspondante est dimensionné plus grand qu'un champ de touche des éléments de contact de fonctions secondaires (8.1) et s'étend de préférence sur plusieurs champs de touches.

3. Partie de contrôle suivant la revendication 2,
caractérisée par le fait
qu'au symbole (9a) plus grand sont associés, sur les champs de touches des éléments de contact de fonctions secondaires (8.1), des symboles de correspondance (9a) associés.

4. Partie de contrôle suivant l'une des revendications précédentes,
caractérisée par le fait
qu'à un ou plusieurs éléments de contact de fonctions secondaires (8.1) sont associés plusieurs symboles (9.1) dont chacun correspond à une fonction prédéterminée par un ou plusieurs éléments de contact de sélection (8.3).

5. Partie de contrôle suivant l'une des revendications précédentes,
caractérisée par le fait
que les symboles (9.1, 9.11) des éléments de contact de fonctions secondaires (8.1) associés aux éléments de contact de sélection (8.3) respectivement fermés sont visibles en vue de l'accentuation optique et les symboles des éléments de contact de fonctions secondaires restants sont invisibles (fig. 5, 6 et 9 à 11).

6. Partie de contrôle suivant l'une des revendications précédentes,
caractérisée par le fait
que les symboles (9.1) des éléments de contact de fonctions secondaires (8.1) sont en partie au moins visibles en permanence et les symboles (9.1) des éléments de contact de fonctions secondaires (8.1) associés aux éléments de contact de sélection (8.3) respectivement fermés sont optiquement accentués par éclairage (19) (fig. 1 à 4).

7. Partie de contrôle suivant l'une des revendications précédentes,
caractérisée par le fait
que les symboles (9.3) des éléments de contact de fonctions secondaires (8.1) associés aux éléments de contact de sélection (8.3) respectivement fermés sont optiquement accentués par une coloration (19, 25).

8. Partie de contrôle suivant la revendication 6 ou 7,
caractérisée par le fait
que les symboles (9.3) des éléments de contact de sélections (8.3) respectivement fermés et des éléments de contact de fonctions secondaires (9.1) associés sont optiquement accentués par la même coloration.

9. Partie de contrôle suivant l'une des revendications précédentes,
caractérisée par le fait
qu'aux éléments de contact de fonctions primaires (8.2, 8.3) et/ou aux éléments de contact de fonctions secondaires (8.1) sont associés, en partie au moins, au moins une indication de fonction (10, 21), respectivement.

10. Partie de contrôle suivant l'une des revendications précédentes,
caractérisée par le fait
qu'aux éléments de contact de fonctions secondaires (8.1) sont attribuées, en partie, au moins plusieurs fonctions secondaires et des symboles correspondants (9.1) (fig. 7 et 8).

11. Partie de contrôle suivant la revendication 10,
caractérisée par le fait
que les champs de touches (8.1, 8.11, 8.2, 8.3) sont constitués par deux feuilles de contact (2, 3) qui sont munies, sur leurs faces en regard, de bandes conductrices (5) et de contacts conducteurs (6) de préférence déposés à l'état de vapeur, que les deux feuilles de contact (2, 3) sont séparées par un dispositif intercalaire (16, 22) constitué par un matériau isolant et disposé dans la zone située à l'extérieur des contacts conducteurs (6) et qu'au moins la feuille de contact extérieure (2) tournée vers le côté extérieur de la surface de contrôle est flexible.

12. Partie de contrôle suivant la revendication 11,
caractérisée par le fait
que le dispositif intercalaire (16) est constitué par des nervures ou picots intercalaires (16) formés sur l'une des feuilles ou sur les deux feuilles de contact (2, 3).

13. Partie de contrôle suivant la revendication 11 ou 12,
caractérisée par le fait
que le dispositif intercalaire (22) est constitué par une feuille intercalaire (22) présentant des ouvertures (23) dans la zone des contacts conducteurs (6).

14. Partie de contrôle suivant l'une des revendications 11 à 13,
caractérisée par le fait
que sur la feuille de contact extérieure (2) est placée une feuille décor (1) constituée par un matériau flexible et au moins partiellement transparent et portant les symboles (9.1, 9.2, 9.3) pour les éléments de contact (8.1, 8.2, 8.3), des indications de fonctions (10, 21), des délimitations de fonctions (28) et analogues.

15. Partie de contrôle suivant la revendication 14,
caractérisée par le fait
que les feuilles de contact (2, 3) et le cas échéant la feuille intercalaire (22) sont transparentes au moins dans la zone des symboles (9.1) des éléments de contact de fonctions secondaires (8.1) et qu'une unité d'éclairage (19) commandée par la partie de commande est prévue, au
moins pour chaque symbole (9.1) en dessous de la feuille de contact intérieure (3) éloignée de la surface de contrôle.

16. Partie de contrôle suivant la revendication 15,
caractérisée par le fait
que l'unité d'éclairage (19) comprend au moins une diode luminescente (19).

17. Partie de contrôle suivant l'une des revendications précédentes,
caractérisée par le fait
qu'entre la feuille décor (1) et la feuille de contact extérieure (2), il est prévu un élément LCID (24) flexible, muni de bandes conductrices électriques (26) et d'électrodes (27), de la Société Rafi, élément dont la transparence est variable sous l'effet de tensions appliquées aux bandes conductrices (26) et électrodes (27), que les bandes conductrices (26) et électrodes (27) sont reliées à la partie de commande, et qu'une feuille de réflecteur flexible (25) est disposée entre l'élément LCID (24) et la feuille de contact extérieure (2).

18. Partie de contrôle suivant la revendication 17,
caractérisée par le fait
que la feuille décor (1) est exempte de symboles dans la zone des éléments de contact de fonctions secondaires (8.1) et que les symboles (9d) des éléments de contact de fonctions secondaires (8.1) sont formés dans la zone correspondante de la feuille de réflecteur (25).

19. Partie de contrôle suivant l'une des revendications 11 à 18,
caractérisée par le fait
que les feuilles de contact (2, 3) et le cas échéant la feuille intercalaire (22) sont transparentes au moins dans la zone des symboles (9, 11) et qu'une unité de visualisation reliée à l'unité de commande est disposée en dessous de la feuille de contact intérieure (3).

20. Partie de contrôle suivant la revendication 19,
caractérisée par le fait
que l'unité de visualisation est un tube-images.

21. Partie de contrôle suivant l'une des revendications précédentes,
caractérisée par le fait
que la surface de contrôle présente en plus de la place pour l'incrustation d'informations supplémentaires sous forme d'images, lettres, caractères ou chiffres qui peuvent être transférés de façon visible à la surface de contrôle par un dispositif d'amenée et d'affichage des informations.
